# EUROPEAN PATENT APPLICATION

(11) **EP 3 064 817 A1**
(43) Date of publication of application: **07.09.2016**
(21) Application number: 16155452.2
(22) Date of filing: 12.02.2016
(51) Int. Cl.: F16L 1/11

(54) **A PIPE LOCATING SYSTEM AND METHOD**

(30) Priority: 13.02.2015 IE 20150033
(71) Applicant: Byrne, James, Dublin (IE)
(72) Inventor: Byrne, James, Dublin (IE)
(74) Representative: O'Neill, Brian

(57) **Abstract**

A device and method for locating a pipe (P), in particular a non metallic subterranean pipe, for example plastic piping for supplying water from a buried water main (M) to a residential property or the like, but along an unknown and subterranean path, the pipe locating system (10) comprising an elongate body (12) defining a lumen (14) and having an inlet (16) about a first end (18) of the body and oriented to facilitate the longitudinal insertion of a deformable element (38) into the lumen (14), and an outlet (20) about a opposed second end (22) of the body and oriented to effect the lateral exit of the deformable element (38) from the lumen (14).

## Description

### Field of the invention

This invention relates to a system and method for locating a pipe, in particular a non metallic subterranean pipe, for example plastic piping for supplying water from a buried water main to a residential property or the like, but along an unknown and subterranean path.

### Background of the invention

In Ireland as in many other countries around the world, water meters, both domestic and industrial, are installed, generally for every property and externally of the property in line between a mains water supply and the connecting pipe supplying the mains water to the property in question.

The form of water meter prevalent in the Irish market includes a metering device located within a custom made meter box which is located in a small excavation on public land bordering the residence or property in question, and where possible replacing the existing shut-off valve located on the supply line between the water mains and the property.

The water utility company may be responsible for the repair of any leaks on the supply line between the mains and the property, which can lead to a loss of water for which the consumer will nevertheless be charged. Regardless of who is responsible for repairing the leak, it is essential that the location and path of the pipe extending from the meter to the property be known in order to facilitate excavation and repair. In the majority of cases this supply pipe is buried beneath the ground and as most modern pipes are no longer formed from metal, cannot be remotely detected from above ground by conventional detection equipment, giving rise to difficulties in locating the pipe for the purposes of excavation and repair.

It is therefore an object of the present invention to provide a pipe locating system and method for use with non-ferrous or non-metallic pipes, in particular modern piping.

### Summary of the invention

According to a first aspect of the present invention there is provided a pipe locating system comprising an elongate body defining a lumen and having an inlet about a first end of the body and oriented to facilitate the longitudinal insertion of a deformable element into the lumen, and an outlet about a opposed second end of the body and oriented to effect the lateral exit of the deformable element from the lumen.

Preferably, the system comprises a guide disposed within the lumen adjacent the outlet and adapted to deflect the element from a longitudinal to a lateral orientation.

Preferably, the body comprises a coupling between the inlet and the outlet and adapted to facilitate the connection of the body to an access junction from which the pipe extends.

Preferably, the coupling is disposed adjacent the outlet.

Preferably, the coupling is adapted for threaded engagement with a mouth of the access junction.

Preferably, the system comprises a handle to facilitate the connection of the body to the access junction.

Preferably, the handle is located adjacent the first end of the body.

Preferably, the body comprises a longitudinally extending key on an exterior of the body.

Preferably, the key has an established orientation relative to the outlet.

Preferably, the system comprises a temporary cover for the mouth of the access junction and comprising an aperture to permit the passage of the body through the cover when seated about the mouth, and a keyway in the aperture shaped and dimensioned to receive the key and oriented to position the outlet to direct the element along a bore of the pipe.

Preferably, at least a portion of the element comprises an electrically conductive material.

According to a second aspect of the present invention there is provided a method of locating a subterranean pipe extending from a subterranean access junction, the method comprising the steps of connecting an elongate body, having an opposed inlet and outlet, to the access junction; longitudinally inserting a deformable element into a lumen in the body extending between the inlet and outlet; deflecting the deformable element to exit the outlet laterally of the lumen; advancing the rod along the pipe; and remotely detecting the position and/or orientation of the deformable element.

Preferably, the method comprises utilising an electrically conductive material to form at least a portion of the element.

Preferably, the method comprises sending an electrical signal along the element and remotely detecting the electrical signal in the element.

As used herein, the term "longitudinal" is intended to mean in a direction along the major dimension of an elongate body.

As used herein, the term "lateral" is intended to mean in a direction extending transversely to the major dimension of an elongate body.

### Brief description of the drawings

The present invention will now be described with reference to the accompanying drawings, in which;
Figure 1 illustrates a schematic side elevation of a water meter box as connected between a water mains and a metered property;
Figure 2 illustrates the water meter box of Figure 1 with a pipe locating system according to an embodiment of the present invention fitted thereto;
Figure 3 illustrates a perspective view of the pipe locating system in isolation from the water meter box;
Figure 4 illustrates a perspective view of the pipe locating system as shown in Figure 3, and having a flexible metal worm inserted therein;

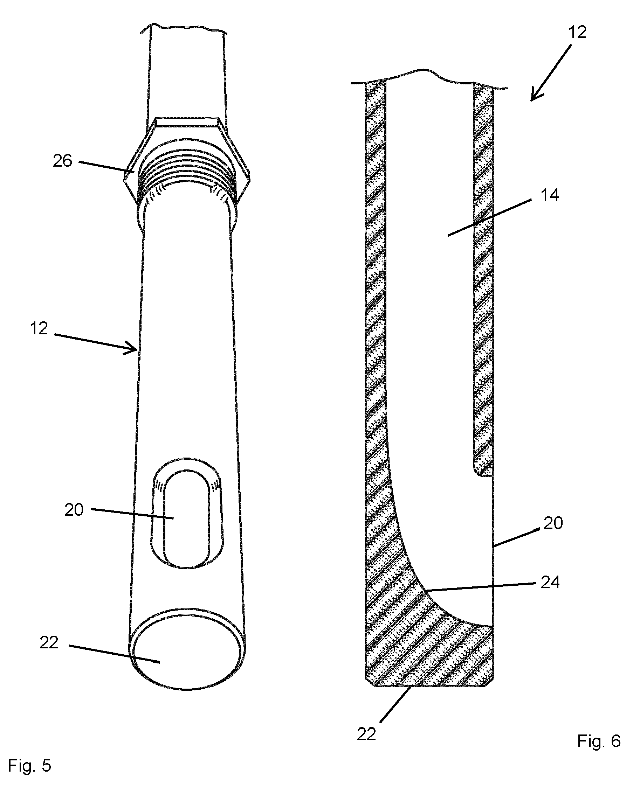

Figure 5 illustrates an enlarged view of a lower end of a body of the system illustrated in Figure 3, showing an outlet;
Figure 6 illustrates a sectioned view of the illustration of Figure 5;

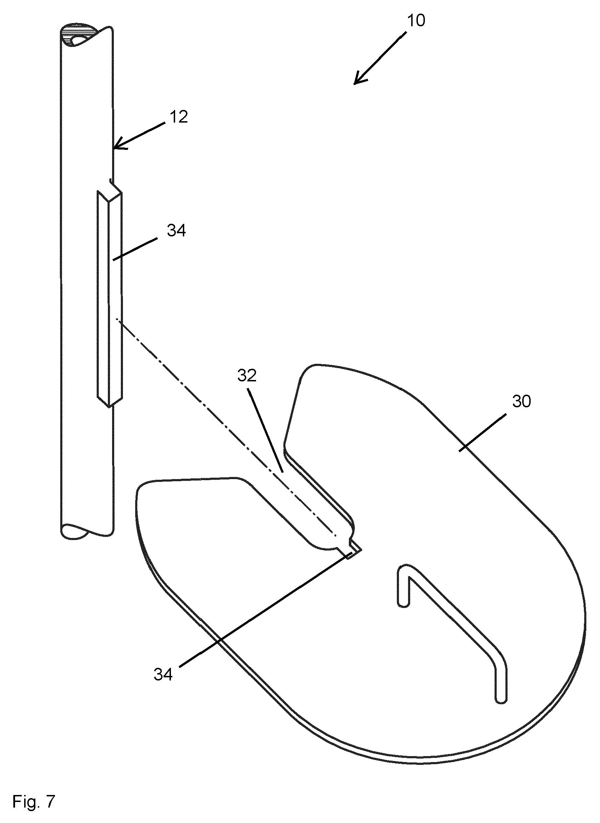

Figure 7 illustrates an enlarged view of a portion of the body, showing a key provided along an exterior of the body, along with a cover, for the water meter box, forming part of the system of the invention.

### Detailed description of the drawings

Referring now to the accompanying drawings there is illustrated a pipe locating system according to a preferred embodiment of the invention, generally indicated as 10, and which may be used to carry out a method according to the present invention and as hereinafter described.

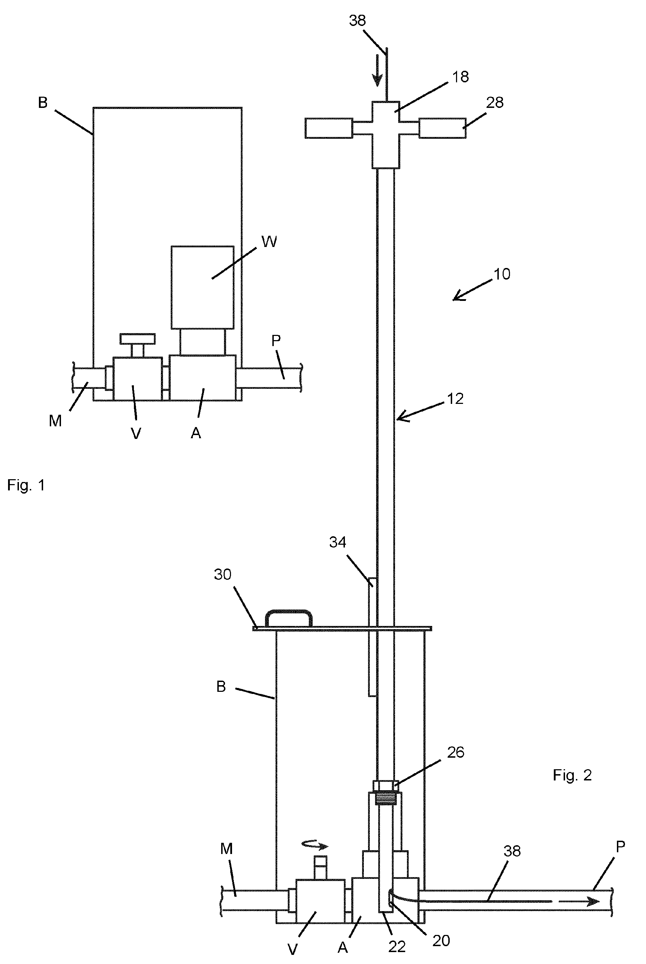

The pipe locating system 10 is adapted to allow the location or mapping of a subterranean pipe P, extending between a conventional water meter box B and a metered property, in order to allow, where necessary, the excavation of the pipe P in order to repair a leak therein. The water meter box B provides ground level access to the subterranean pipe P at a location outside the property, from which, as will be described hereinafter in detail, the system 10 of the invention may be used to remotely locate the pipe P as it extends from the meter box B to the property. Referring in particular to Figure 1 the meter box B conventionally houses a shutoff valve V into which a mains supply pipe M is connected at one side of the meter box B, and at the other side an access junction A is connected. In normal usage a water meter W is secured above and in fluid communication with the access junction A, and once the shutoff valve V is open water will flow from the mains pipe M, into the access junction A where the water is directed upwardly through the water meter W in order to measure the volume of water usage, before returning down through the access junction A to exit into the supply pipe P to the property.

The shutoff valve V may be operated in order to shut off the supply of mains water to the water meter W and thus the property being supplied by the meter box B. At this point the water meter W may be uncoupled, normally by unscrewing, from the access junction A. The access junction A then provides a point of entry to the supply pipe P via the point at which the water meter W is conventionally connected. The pipe locating system 10 of the present invention may then interface with the access junction A in order to allow the path or location of the pipe P to be determined from above ground, as hereinafter described.

The locating system 10 thus comprises an elongate body 12 defining a lumen 14 extending longitudinally or axially therethrough, and which body 12 may usefully be formed from a length of metal or plastic tubing or the like. The body 12 defines an inlet 16 about a first end 18 and which facilitates longitudinal or axial access to the lumen 14. The body 12 further defines an outlet 20 about or adjacent a second end 22 and having a guide 24 operatively associated therewith and adapted to effect the lateral or radial egress from the lumen 14 as will be described hereinafter.

The system 10 further comprises a coupling 26 provided about the body at a location intermediate the inlet 16 and the outlet 20. The coupling 24 is adapted to allow the body 12 to be actively coupled to the access junction A. The coupling 26, in the preferred embodiment illustrated, includes an external thread which corresponds with the thread on the access junction A for normally receiving the water meter W. The body 12 may therefore be threaded into engagement with the access junction A via the coupling 26. The system 10 preferably comprises a handle 28 located adjacent the first end 18, in order facilitate ease of connection to the access junction A by an operator from above ground.

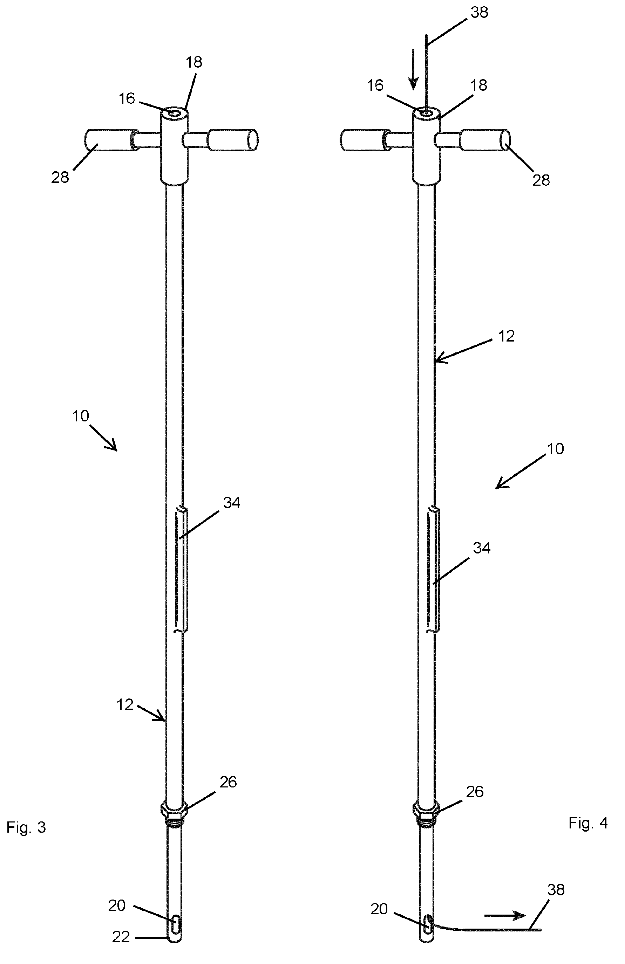

Referring in particular to Figures 2, 3, and 4, the coupling 26 is positioned, relative to the outlet 20, such that when fully threaded into engagement with the access junction A the outlet 20 is vertically aligned with the supply pipe P exiting the meter box B. However, in addition to vertically aligning the outlet 20 with the supply pipe P, it is necessary to ensure that the boy 12 is rotated into a position in which the outlet 20 is actually facing towards the supply pipe P. The system 10 thus preferably comprises a temporary cover 30 which is shaped and dimensioned to be seated into place about the open upper end of the meter box B, the cover 30 including an aperture 32 to allow the passage of the body 12 therethrough. The body 12 additionally comprises a key 34 extending longitudinally along an exterior thereof, the cover 30 comprising a corresponding keyway 36 formed as an extension of the aperture 32, and oriented, together with the key 34, such as to position the outlet 20 directly facing the supply pipe P.

Turning then to the operation of the pipe locating system 10, the meter box B is accessed by removing the normal cover (not shown) thereto, and the shutoff valve V is then closed as shown in Figure 2 in order to shut off the mains supply of water into the meter box B. Once the mains supply has been cut off, the water meter W may then be threadably or otherwise removed from the access junction A. At this point the second or lower end 22 of the body 12 is inserted downwardly into the upper opening in the access junction A. The coupling 26 will then come into register with the threaded opening in the access junction A, and the handle 28 may then be used to begin turning the body 12 in order to engage the threaded coupling 26 with the access junction A. Once the coupling 26 is fully threaded into the access junction A, the temporary cover 30 is located about the upper opening in the meter box B, the body 12 being accommodated by the aperture 32. A minor rotation of the body 12 may then be necessary in order to bring the key 34 into register with the keyway 36 provided in the cover 30. At this point, by aligning the key 34 and keyway 36, the outlet 20 is then aligned with the supply pipe P to the property.

A deformable element 36 such as a rod and more preferably a conventional metal worm, is then longitudinally or axially inserted into the lumen 14 via the inlet 16. The worm 36 is advanced through the lumen 14 towards the outlet 20, and will thus come into contact with the guide 24 adjacent the outlet 20. The guide 24 will thus deflect the deformable worm 36 laterally in order to turn through approximately 90 degrees before exiting the outlet 20. By further advancing the worm 36 it will be displaced into and along the pipe P. Once a sufficient length of the worm 36 has been advanced into the pipe P, conventional detection apparatus (not shown) may then be used from above ground in order to locate the worm 36. Detection may involve applying an electrical signal to the worm 36 from that portion of the worm 36 remaining above ground and outside of the body 12. This electrical signal will then travel through the worm 36, including that portion located in the subterranean pipe P, which electrical signal may then be remotely detected by conventional detection equipment (not shown). This will then allow the exact location of the supply pipe P to be mapped out from above ground, allowing the pipe P to be subsequently excavated. Once the location has been suitable marked or otherwise mapped, the worm 36 may be removed and the body 12 unthreaded from the access junction A. The water meter W may then be reconnected to the access junction A to allow conventional operation, once the shutoff valve V is reopened.

Thus, the present invention provides a simple yet effective means of locating a subterranean non-metallic pipe, for the purposes of repair or replacement.

## Claims

1. A pipe locating system comprising an elongate body defining a lumen and having an inlet about a first end of the body and oriented to facilitate the longitudinal insertion of a deformable element into the lumen, and an outlet about a opposed second end of the body and oriented to effect the lateral exit of the deformable element from the lumen.

2. A pipe locating system according to claim 1 comprising a guide disposed within the lumen adjacent the outlet and adapted to deflect the element from a longitudinal to a lateral orientation.

3. A pipe locating system according to claim 1 or 2 in which the body comprises a coupling between the inlet and the outlet and adapted to facilitate the connection of the body to an access junction from which the pipe extends.

4. A pipe locating system according to claim 3 in which the coupling is disposed adjacent the outlet.

5. A pipe locating system according to claim 3 or 4 in which the coupling is adapted for threaded engagement with a mouth of the access junction.

6. A pipe locating system according to any preceding claim comprising a handle to facilitate the connection of the body to the access junction.

7. A pipe locating system according to claim 6 in which the handle is located adjacent the first end of the body.

8. A pipe locating system according to any preceding claim in which the body comprises a longitudinally extending key on an exterior of the body.

9. A pipe locating system according to claim 8 in which the key has an established orientation relative to the outlet.

10. A pipe locating system according to claim 8 or 9 comprising a temporary cover for a mouth of the access junction and comprising an aperture to permit the passage of the body through the cover when seated about the mouth, and a keyway in the aperture shaped and dimensioned to receive the key and oriented to position the outlet to direct the element along a bore of the pipe.

11. A pipe locating system according to any preceding claim in which at least a portion of the element comprises an electrically conductive material.

12. A method of locating a subterranean pipe extending from a subterranean access junction, the method comprising the steps of connecting an elongate body, having an opposed inlet and outlet, to the access junction; longitudinally inserting a deformable element into a lumen in the body extending between the inlet and outlet; deflecting the deformable element to exit the outlet laterally of the lumen; advancing the deformable element along the pipe; and remotely detecting the position and/or orientation of the deformable element.

13. A method according to claim 12 comprising utilising an electrically conductive material to form at least a portion of the element.

14. A method according to claim 13 comprising the step of sending an electrical signal along the element and remotely detecting the electrical signal in the element.
